# EUROPÄISCHE PATENTSCHRIFT

(11) **EP 0 405 078 B1**
(45) Veröffentlichungstag und Bekanntmachung des Hinweises auf die Patenterteilung: **13.10.1993**
(21) Anmeldenummer: 90107196.9
(22) Anmeldetag: 14.04.1990
(51) Int. Cl.: F28D 5/00, B01D 1/02, B64G 1/50

(54) **Verdampfungswärmetauscher**
Evaporative heat exchanger
Echangeur de chaleur à évaporation

(30) Priorität: 30.06.1989 DE 3921485
(43) Veröffentlichungstag der Anmeldung: 02.01.1991
(73) Patentinhaber: ERNO Raumfahrttechnik Gesellschaft mit beschränkter Haftung, D-28199 Bremen (DE)
(72) Erfinder: Leidinger, Bernhard, Dr., D-2805 Stuhr 1 (DE)

(56) Entgegenhaltungen:
- EP-A- 0 361 009
- DE-C- 3 718 873
- DE-U- 8 815 216

## Beschreibung

Die Erfindung betrifft einen Verdampfungswärmetauscher gemäß dem Oberbegriff des Patentanspruches 1.

Ein derartiger Wärmetauscher ist aus der DE-U-88 15 216 bekannt geworden. Es handelt sich bei diesem bekannten Wärmetauscher um einen Verdunstungskondensator, der für terrestische Anwendungsfälle vorgesehen ist. Daneben besteht aber insbesondere bei Raumfahrzeugen, die sich in der Auf- oder Abstiegsphase durch die Erdatmosphäre befinden oder die in der Erdumlaufbahn extremen thermischen Belastungen ausgesetzt sind, das Problem, eine sichere und zuverlässige Wärmeabfuhr zu gewährleisten.

Aus der DE-C-37 18 873 ist zu diesem letztgenannten Zweck bereits ein Verdampfungswärmetauscher bekannt, bei dem das zu kühlende Medium eines aktiven Flüssigkeitskreislaufes zur Wärmeabfuhr mit einem zu verdampfenden Medium in wärmeübertragenden Kontakt gebracht wird, welches in einem mitgeführten Vorratsbehälter gelagert ist. Den entstehenden Dampf bläst das Raumfahrzeug in seine Umgebung ab.

Um einerseits das zu verdampfende Medium durch eine vollständige Verdampfung möglichst optimal auszunutzen und dabei eine ausreichende hohe Wärmeübertragung zwischen dem zu verdampfenden Medium und den Kühlflüssigkeitskanälen zu erreichen, muß der entstehende Dampf von dem unverdampften Teil des Mediums getrennt werden. Hierdurch wird verhindert, daß der unverdampfte Teil in Form von größeren Flüssigkeitstropfen abgeblasen wird, ohne durch seine Verdampfung zur Kühlung ausgenutzt worden zu sein.

Bei der aus der DE-C-37 18 873 bekannten Anordnung wurde angestrebt, durch eine gefaltete Formgebung der Kühlflüssigkeitskanäle in Strömungsrichtung nicht verdampfte Flüssigkeitsreste mit Hilfe von Massenträgheitskräften an den Wänden der Kühlflüssigkeitskanäle abzulagern, um sie dort in die Gasphase zu überführen. Untersuchungen an diesen vorbekannten Verdampfungswärmetauscher haben jedoch ergeben, daß die Ausnutzung des zu verdampfenden Mediums noch nicht optimal ist.

Ähnliches gilt auch bei der Verwendung eines Verdampfungswärmetauschers gemäß dem Gattungsbegriff, sofern dieser für die beschriebene Verwendung in Raumfahrzeugen entsprechend der aus der DE-C-37 18 873 bekannten Anordnung so umgerüstet wird, die das zu verdampfende Medium in dem Raum verdampft, in den es einströmt. Auch in diesem Fall ist die Verdampfung noch unvollständig.

Der Erfindung liegt demgemäß die Aufgabe zugrunde, einen Verdampfungswärmetauscher der eingangs genannten Gattung so auszubilden, daß das zu verdampfende Medium praktisch vollständig in die Dampfphase überführt und so für eine möglichst hohe Wärmeübertragung ausgenutzt wird.

Erfindungsgemäß wird diese Aufgabe durch die im Patentanspruch 1 gekennzeichneten Merkmale gelöst. Vorteilhafte Weiterbildungen des erfindungsgemäßen Wärmetauschers, die insbesondere der weitern Optimierung der Anordnung dienen, sind in den weiteren Ansprüchen angegeben.

Durch die erfindungsgemäß vorgesehene Ausgestaltung der einzelnen Kühlmittelröhrchen mit in regelmäßigen Abständen vorgesehenen Eindrückungen ergibt sich eine Optimierung der Wärmeübertragungsverhältnisse bei gleichzeitig möglichst geringem Druckverlust sowohl des zu kühlenden Kreislaufs - die Pumpenleistung wird minimiert - als auch des zu verdampfenden Mediums auf dem Weg von Einlaßventil zur Austrittsöffnung und die Verdampfungstemperatur kann bei geringem Druck sehr niedrig liegen.

Im folgenden soll die Erfindung anhand eines in der Zeichnung dargestellten bevorzugten Ausführungsbeispiels näher erläutert werden. Es zeigen:
- Fig. 1: einen Längsschnitt durch einen Verdampfungswärmetauscher,
- Fig. 2: eine seitliche Draufsicht auf die zu einer Ebene gehörenden, zu einer Wendel zusammengefaßten Röhrchen,
- Fig. 3: einen Schnitt gemäß III-III durch die in Fig. 1 gezeigte Anordnung und
- Fig. 4: eine Darstellung eines Abschnittes eines abgeplatteten Röhrchens für Kühlflüssigkeitskanäle mit entsprechenden Querschnittsdarstellungen.

In den Figuren sind jeweils gleiche Bauteile mit den gleichen Bezugszeichen versehen.

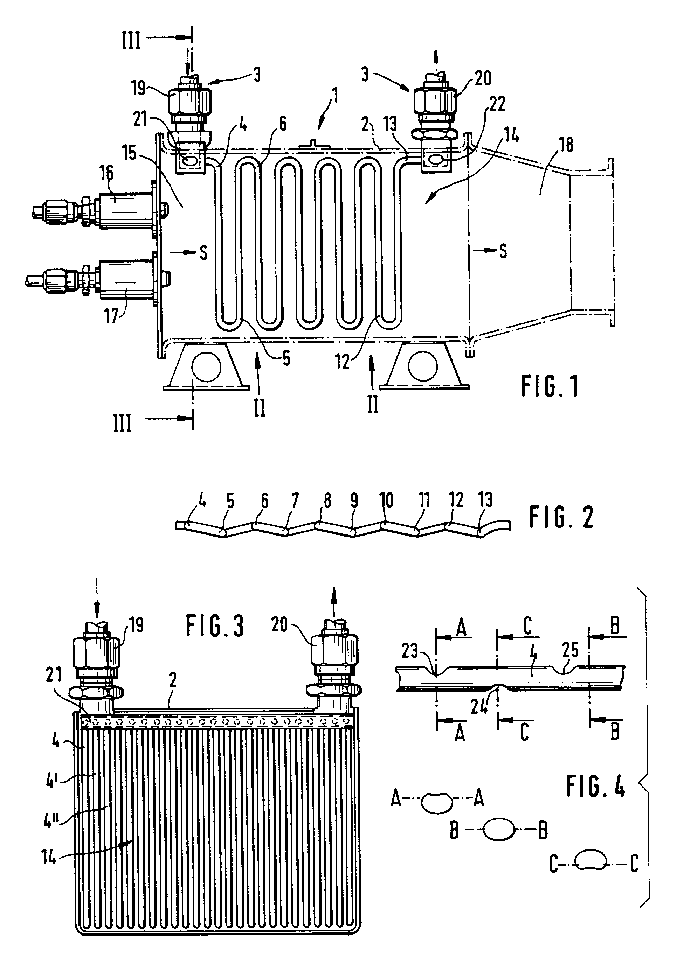

In Fig. 1 ist ein schematisierter Längsschnitt durch einen Verdampfungswärmetauscher 1 dargestellt. Der Verdampfungswärmetauscher 1 besitzt ein Gehäuse 2, in das ein aktiver Flüssigkeitskühlkreislauf 3, beispielsweise der Wasser- oder R114-Kühlkreislauf eines Raumfahrzeuges oder des Hydrauliköls, in Form eines quer zur Längsrichtung des Verdampfungswärmetauschers angeordneten, aus einzelnen Röhrchen 4 bis 13 bestehenden Rohrbündels 14 eingesetzt ist.

Im Gehäuse 2 des Verdampfungswärmetauschers 1 ist an einem Ende an der in Fig. 1 linken Seite ein Raum 15 vorgesehen, in den über Einlaßventile 16 und 17 aus einem hier nicht dargestellten Vorratsbehälter ein zu verdampfendes Medium, beispielsweise Wasser und/oder Ammoniak, eingeleitet werden kann. Das andere Ende des annähernd rechteckförmigen Gehäuses 11 wird von einer Dampfaustrittsmündung 18 gebildet.

Der aktive Kühlkreislauf 3 besitzt einen Einlaß 19 und einen Auslaß 20. Zwischen dem Einlaß 19 und dem Auslaß 20 verlaufen senkrecht zur Strömungsrichtung des zu verdampfenden Mediums die Kühlflüssigkeitskanäle, die vom Rohrbündel 14 gebildet werden.

Das Rohrbündel 14 besteht dabei, wie insbesondere aus der in Fig. 2 gezeigten Schnittdarstellung hervorgeht, aus mehreren, parallel zueinander angeordneten Rohrlagen, hier dargestellt anhand von übereinanderliegend angeordneten Röhrchen 4,4′,4˝ usw. Jede dieser Rohrlagen besteht ihrerseits aus einer Anzahl von Röhrchen 4 bis 13, die jeweils, wie aus der Draufsicht in Fig. 1 zu erkennen ist, über halbkreisförmig gekrümmte Bereiche miteinander verbunden und so jeweils zu einer Rohrwendel zusammengefaßt sind. Die aus diesen Rohrwendeln bestehenden Rohrlagen sind über senkrecht sowohl zur Strömungsrichtung, die in der Fig. 1 durch den mit "S" gekennzeichneten Pfeil charakterisiert ist, als auch zu den Röhrchen 4 bis 13 verlaufende Verteilungsbzw. Sammelrohre 21 und 22 mit dem Einlaß 19 bzw. Auslaß 20 für das Kühlmittel verbunden.

Aus dem Verteilungsrohr 21 strömt das Kühlmittel des aktiven Kühlkreislaufes 3 in die Kühlflüssigkeitskanäle des Rohrbündels 14, um dann über das Sammelrohr 22 und den Auslaß 20 die Anordnung wieder zu verlassen.

Wichtig für die Wirkungsweise des vorstehend beschriebenen Wärmetauschers als Tropfenfallenverdampfer ist, daß zwei jeweils zu einer solchen Rohrwendel gehörige, aufeinanderfolgende Röhrchen, beispielsweise die Röhrchen 4 und 5, in bezug auf die von der Rohrwendel gebildete Ebene, die in Fig. 1 der Zeichenebene entspricht, gegeneinander höhenversetzt angeordnet sind. Dies verdeutlicht auch die Darstellung in Fig 3. Die jeweils zwei aufeinanderfolgende Röhrchen verbindenden gekrümmten Bereiche bilden dabei mit dieser Ebene einen Winkel von etwa 15 Grad, so daß sich insgesamt eine gefaltete Struktur jeder einzelnen Rohrwendel mit einem Faltungswinkel aufeinanderfolgender Rohrabschnitte von etwa 30 Grad zueinander ergibt. Da die übereinanderliegend angeordneten Rohrwendeln jeweils parallel zueinander ausgerichtet sind, ergibt sich somit die bereits erwähnte, durch den Höhenversatz gestaffelte Anordnung, so daß jede folgende Rohrreihe in der Lücke der vorhergehenden steht.

Die einzelnen Röhrchen 4 bis 13 sind, wie in Fig. 4 am Beispiel des Röhrchens 4 gezeigt ist, abgeplattet ausgebildet. Die verschiedenen Schnitte A-A, B-B und C-C veranschaulichen dabei den Röhrchenquerschnitt.

Der Rohrabschnitt 4 besteht im wesentlichen aus einem abgeplatteten Rohr, dessen Innendurchmesser bei dem hier dargestellten Ausführungsbeispiel vor dem Pressen 2,51 mm betrug. Der Rohrabschnitt weist zur Erzeugung von Verwirbelungen in der Kreislaufströmung Eindrückungen 23-25 auf, die zu einem guten Wärmeübertragungsverhalten beitragen. Die Eindrückungen 23-25 sind abwechselnd in gleichen Abständen an der Oberseite und der Unterseite des abgeplatteten Röhrchens 4 vorgesehen. Der Abstand beträgt bei einer bevorzugten Ausgestaltung etwa 4,25 mm. Der durch die Eindrückungen 23-25 des Röhrchens 4 gebildete Querschnitt ist aus den Querschnittsansichten A-A, C-C zu erkennen.

Eine bevorzugte Länge für den geraden Bereich der Röhrchens 4 bis 13 beträgt 95 mm. Der bündelartige Aufbau des aktiven Kühlkreislaufes 3 setzt sich bei einer vorgesehenen Ausführungsform aus 23 Lagen mit je 10 Röhrchen, somit aus 230 Röhrchen zusammen.

Bei dem Verdampfungswärmetauscher 1 wird der Volumenstrom des zu verdampfenden Mediums, beispielsweise Wasser, mit Hilfe der Eingangsventile 16 und 17 gesteuert, die ihrerseits von nicht dargestellten Magneten im Pulsbetrieb je kurzzeitig geöffnet werden.

Das zu verdampfende Medium wird mit einem Förderdruck, der oberhalb des Siededrucks im Verdampfungsraum liegt, durch die Einlaßventile 16 und 17 in den Raum 15 gedrückt. Aufgrund des hier vorherrschenden geringeren Druckes verdampft bei ca. 60°C Speisetemperatur des Kühlmittels ein kleiner Teil des zu verdampfenden Mediums, bei Wasser ca. 5-8 % auf die Masse bezogen, adiabatisch und kühlt dadurch das zu verdampfende Medium ab.

Das durch diesen ersten Verdampfungsvorgang im Raum 15 entstandene Gas vermischt sich mit den verbliebenen Flüssigkeitstropfen und bildet eine durch die Gasexpansion beschleunigte Zweiphasenströmung, deren volumenbezogene Bestandteile bei Verwendung von 25°C warmem Wasser etwa zu 99,95 % Wasserdampf und 0,05 % Wasser sind, falls der Druck im Verdampfungsraum etwa 5 bis 10 mbar beträgt.

Diese Zweiphasenströmung wird nun um die Rohre des Rohrbündels 14 des Kühlkreislaufes 3 geleitet. Der Kühlkreislauf 3 kann dabei in nicht dargestellter Weise aus mehreren separaten Kühlflüssigkeitskreisläufen bestehen.

Die Kühlflüssigkeit in den vorgenannten Kühlkreisläufen transportiert in an sich bekannter Weise Wärme von Wärmeerzeugern zu den Kühlflüssigkeitskanälen, die den eigentlichen Verdampfungswärmetauscher bilden, wobei an den Oberflächen der Kühlflüssigkeitskanäle Wärme an das zu verdampfende Medium übertragen und dieses verdampft wird. Der durch den Wärmeaustausch entstandene Dampf verläßt anschließend über die Dampfaustrittsmündung 18 das Raumfahrzeug.

Bei dem Durchtritt durch die das Rohrbündel 14 bildenden Kühlflüssigkeitskanäle erfahren die in der Gasphase mitgerissenen Flüssigkeitstropfen aufgrund ihrer Massenträgheit eine Abweichung von der Gasströmungsrichtung und prallen gegen nahegelegene Kühlflüssigkeitskanalaußenwände. Dort bilden sie mit anderen Flüssigkeitstropfen einen Flüssigkeitsfilm, der teilweise verdampft. Aufgrund der Staffelung der einzelnen Röhrchen stellen diese für die Flüssigkeitstropfen eine nach Art eines Tropfenabscheiders wirkende erhitzte Abscheidevorrichtung dar, wobei die Röhrchen des Rohrbündels 14 als Ablenkflächen dienen. An den Faltstellen der Kühlflüssigkeitskanäle bilden sich aus den unverdampften Resten des Flüssigkeitsfilms neue Tropfen, die von der Zweiphasenströmung mitgerissen und an einer anderen Stelle erneut an einer Kühlflüssigkeitskanalaußenwandfläche gelagert werden. Bei dem erfindungsgemäßen Verdampfungswärmetauscher erfolgt dabei durch die vorgesehene Strömungsaufteilung in unterschiedliche Strömungsabschnitte mit wechselnden Strömungsrichtungen eine besonders intensive Kontaktierung des zu verdampfenden Mediums, die zu einer vollständigen Verdampfung mit einem hervorragenden Wirkungsgrad der Wärmeübertragung führen.

## Patentansprüche

1. Verdampfungswärmetauscher (1) mit wenigstens einem aktiven Kühlkreislauf (3) mit einem Raum, der wenigstens ein Einlaßventil (16, 17) für ein zugeleitetes Medium aufweist, und mit voneinander beabstandeten Kanälen, zwischen denen das Medium leitbar ist und wobei die Kanäle aus einem Bündel von senkrecht zur Hauptströmungsrichtung des Mediums parallel zueinander angeordneten Röhrchen (4-13) bestehen, wobei jeweils zwei in Bezug auf die Hauptströmungsrichtung aufeinander folgende Röhrchen bezüglich einer in der Hauptströmungsrichtung verlaufenden Ebene alternierend seitlich versetzt zueinander angeordnet sind, dadurch gekennzeichnet, daß jedes Röhrchen (4-13) Eindrückungen (23-25) aufweist.

2. Verdampfungswärmetauscher nach Anspruch 1, dadurch gekennzeichnet, daß die Eindrückungen (23-25) jedes Röhrchens (4-13) abwechselnd und im gleichen Abstand an der Ober- und/oder Unterseite des Röhrchens vorgesehen sind.

3. Verdampfungswärmetauscher nach einem der Ansprüche 1 bis 3, dadurch gekennzeichnet, daß die Röhrchen (4-13) abgeflacht sind.

4. Verdampfungswärmetauscher nach einem der Ansprüche 1 bis 3, dadurch gekennzeichnet, daß der bündelartige Aufbau der Kühlflüssigkeitskanäle (4-13) für das Kontaktieren mit versprühter, zu verdampfender Flüssigkeit vorgesehen ist, die zur Benetzungsverbesserung mit einem Benetzungsmittel angereichert ist und deren Versprühen über eine adiabate Entspannungsverdampfung der in der Speiseleitung zwar unterkühlten, den Einlaßventilen (16,17) zugeführten, aber relativ zum Druck im Raum (15) überhitzten Flüssigkeit erfolgt.

5. Verdampfungswärmetauscher nach einem der Ansprüche 1 bis 4, dadurch gekennzeichnet, daß die Röhrchen (4-13) des Rohrbündels die Gehäusewände zur Vermeidung von Vereisungen kontaktieren.

6. Verdampfungswärmetauscher nach einem der Ansprüche 1 bis 5, dadurch gekennzeichnet, daß als verdampfendes Kühlmittel Wasser verwendet wird.

7. Verdampfungswärmetauscher nach einem der Ansprüche 1 bis 5, dadurch gekennzeichnet, daß als verdampfendes Kühlmittel Ammoniak verwendet wird.

8. Verdampfungswärmetauscher nach einem der Ansprüche 1 bis 5, dadurch gekennzeichnet, daß als verdampfendes Kühlmittel nacheinander sowohl Wasser als auch Ammoniak verwendet wird.

## Claims

1. Evaporative heat exchanger (1) with at least one active cooling circuit (3), with a chamber which has at least one inlet valve (16, 17) for a medium supplied thereto, and with ducts which are spaced one from another and between which the medium can be directed, these ducts consisting of a bundle of small-bore tubes (4-13) which are arranged parallel one with another and perpendicular to the principal flow direction of the medium, each two successive small-bore tubes in said flow direction being alternately laterally staggered with respect to each other and to a plane running in said flow direction, characterised in that each small-bore tube (4-13) has indentations (23-25).

2. Evaporative heat exchanger according to Claim 1, characterised in that the indentations (23-25) of each small-bore tube (4-13) are provided at evenly spaced, alternating locations on its upper and/or lower surfaces.

3. Evaporative heat exchanger according to any one of Claims 1 to 3, characterised in that the small-bore tubes (4-13) are flattened.

4. Evaporative heat exchanger according to any one of Claims 1 to 3, characterised in that the bundle-like arrangement of the coolant ducts (4-13) is provided in order to bring about contacting with a finely dispersed mist of liquid which is intended for evaporation, and to which a wetting agent has been added in order to improve wetting, and the dispersion of this liquid, to form the mist, is effected by adiabatically flash-evaporating it subsequent to supplying it to the inlet valves (16, 17) under conditions such that, although subcooled in the supply line, it is superheated in relation to the pressure in the chamber (15).

5. Evaporative heat exchanger according to any one of Claims 1 to 4, characterised in that the small-bore tubes (4-13) of the tube bundle contact the casing walls in order to avoid icing.

6. Evaporative heat exchanger according to any one of Claims 1 to 5, characterised in that water is used as an evaporating coolant.

7. Evaporative heat exchanger according to any one of Claims 1 to 5, characterised in that ammonia is used as an evaporating coolant.

8. Evaporative heat exchanger according to any one of Claims 1 to 5, characterised in that both water and ammonia are used, in succession, as evaporating coolants.

## Revendications

1. Echangeur thermique à évaporation (1) avec au moins une circulation active de refroidissement (3), avec une chambre qui comporte au moins une vanne d'admission (16, 17) pour un fluide amené à cette chambre, et avec des canaux espacés les uns des autres entre lesquels le fluide est susceptible d'être dirigé, tandis que ces canaux sont constitués par un faisceau de petits tubes (4 à 13) disposés parallèlement entre eux et perpendiculairement à la direction de l'écoulement principal du fluide, cependant que respectivement deux petits tubes se succédant par rapport à la direction de l'écoulement principal, sont disposés en étant décalés latéralement l'un par rapport à l'autre, par rapport à un plan s'étendant dans la direction de l'écoulement principal, échangeur thermique caractérisé en ce que chaque petit tube (4 à 13) comporte des empreintes (23 à 25).

2. Echangeur thermique à évaporation selon la revendication 1, caractérisé en ce que les empreintes (23 à 25) de chaque petit tube (4 à 13) sont prévues alternativement et au même intervalle sur la face supérieure et/ou sur la face inférieure du petit tube.

3. Echangeur thermique à évaporation selon une des revendications 1 et 2, caractérisé en ce que les petits tubes (4 à 13) sont aplatis.

4. Echangeur thermique à évaporation selon une des revendications 1 à 3, caractérisé en ce que la constitution en forme de faisceau des canaux de liquide de refroidissement (4 à 13) est prévue pour la mise en contact avec le liquide à évaporer pulvérisé, qui pour améliorer le mouillage est enrichi par un agent de mouillage et dont la pulvérisation s'effectue par l'intermédiaire d'une évaporation de détente adiabatique du liquide, en vérité sur-refroidi, amené dans la canalisation d'alimentation aux vannes d'admission (16, 17) mais surchauffé par rapport à la pression dans la chambre (15).

5. Echangeur thermique à évaporation selon une des revendications 1 à 4, caractérisé en ce que les petits tubes (4 à 13) du faisceau de tubes sont en contact avec les parois du carter pour éviter des givrages.

6. Echangeur thermique à évaporation selon une des revendications 1 à 5, caractérisé en ce que, comme fluide de refroidissement à évaporer, on utilise de l'eau.

7. Echangeur thermique à évaporation selon une des revendications 1 à 5, caractérisé en ce que, comme fluide de refroidissement à évaporer, on utilise de l'ammoniac.

8. Echangeur thermique à évaporation selon une des revendications 1 à 5, caractérisé en ce que comme fluide de refroidissement à évaporer, on utilise successivement, aussi bien de l'eau qu'également de l'ammoniac.
